# EUROPEAN PATENT APPLICATION

(11) **EP 4 703 643 A1**
(43) Date of publication of application: **04.03.2026**
(21) Application number: 25199445.5
(22) Date of filing: 01.09.2025
(51) Int. Cl.: F23R 3/28

(54) **SPILL RETURN FUEL NOZZLES FOR USAGE AS START NOZZLES**

(30) Priority: 30.08.2024 US 202418821274
(71) Applicant: PRATT & WHITNEY CANADA CORP., Longueuil, Québec J4G 1A1 (CA)
(72) Inventor: FRANCIS, Roger Antony, (01BE5) Longueuil, J4G 1A1 (CA)
(74) Representative: Dehns

(57) **Abstract**

A nozzle (20) for a fuel injector (10) includes a fuel passage (40), a swirl chamber (42), a port (44), a discharge orifice, and a spill passage (48). The fuel passage (40) fluidly connects to the port (44), which extends along a circumferential direction about the nozzle axis (A) at a peripheral wall of the swirl chamber (42). The discharge orifice fluidly connects the end of the swirl passage to an outlet (50) of the nozzle (20). The spill passage (48) fluidly connects the end of the swirl chamber (42) to a location upstream from the fuel passage (40).

## Description

### TECHNICAL FIELD

This invention relates generally to turbomachinery, and specifically to fuel injectors. In particular, the invention relates to features of fuel injectors for managing temperature of components exposed to high temperature and pressure of combustion.

### BACKGROUND

Gas turbine engines are rotary-type combustion turbine engines built around a power core made up of a compressor, combustor, and turbine, arranged in flow series with an upstream inlet and downstream exhaust. The compressor section compresses air from the inlet, which is mixed with fuel in the combustor and ignited to generate hot combustion gas. The turbine section extracts energy from the expanding combustion gas, and drives the compressor section via a common shaft. Expanded combustion products are exhausted downstream, and energy is delivered in the form of rotational energy in the shaft, reactive thrust from the exhaust, or both.

Gas turbine engines provide efficient, reliable power for a wide range of applications in aviation, transportation, and industrial power generation. Small-scale gas turbine engines typically utilize a one-spool design, with co-rotating compressor and turbine sections. Larger-scale combustion turbines including jet engines and industrial gas turbines (IGTs) are generally arranged into a number of coaxially nested spools. The spools operate at different pressures, temperatures and spool speeds, and may rotate in different directions.

Individual compressor and turbine sections in each spool may also be subdivided into a number of stages, formed of alternating rows of rotor blade and stator vane airfoils. The airfoils are shaped to turn, accelerate, and compress the working fluid flow, or to generate lift for conversion to rotational energy in the turbine.

Industrial gas turbines often utilize complex nested spool configurations, and deliver power via an output shaft coupled to an electrical generator or other load, typically using an external gearbox. In combined cycle gas turbines (CCGTs), a steam turbine or other secondary system is used to extract additional energy from the exhaust, improving thermodynamic efficiency. Gas turbine engines are also used in marine and land-based applications, including naval vessels, trains and armored vehicles, and in smaller-scale applications such as auxiliary power units.

Aviation applications include turbojet, turbofan, turboprop and turboshaft engine designs. In turbojet engines, thrust is generated primarily from the exhaust. Modern fixed-wing aircraft generally employ turbofan and turboprop configurations, in which the low-pressure spool is coupled to a propulsion fan or propeller. Turboshaft engines are employed on rotary-wing aircraft, including helicopters, typically using a reduction gearbox to control blade speed. Unducted (open rotor) turbofans and ducted propeller engines also known, in a variety of single-rotor and contra-rotating designs with both forward and aft mounting configurations.

Aviation turbines generally utilize two and three-spool configurations, with a corresponding number of coaxially rotating turbine and compressor sections. In two-spool designs, the high-pressure turbine drives a high-pressure compressor, forming the high-pressure spool or high spool. The low-pressure turbine drives the low spool and fan section, or a shaft for a rotor or propeller. In three-spool engines, there is also an intermediate pressure spool. Aviation turbines are also used to power auxiliary devices including electrical generators, hydraulic pumps and elements of the environmental control system, for example using bleed air from the compressor or via an accessory gearbox.

Additional turbine engine applications and turbine engine types include intercooled, regenerated or recuperated and variable cycle gas turbine engines, and combinations thereof. In particular, these applications include intercooled turbine engines, for example with a relatively higher pressure ratio, regenerated or recuperated gas turbine engines, for example with a relatively lower pressure ratio or for smaller-scale applications, and variable cycle gas turbine engines, for example for operation under a range of flight conditions including subsonic, transonic and supersonic speeds. Combined intercooled and regenerated/recuperated engines are also known, in a variety of spool configurations with traditional and variable cycle modes of operation.

Turbofan engines are commonly divided into high and low bypass configurations. High bypass turbofans generate thrust primarily from the fan, which accelerates airflow through a bypass duct oriented around the engine core. This design is common on commercial aircraft and transports, where noise and fuel efficiency are primary concerns. The fan rotor may also operate as a first stage compressor, or as a pre-compressor stage for the low-pressure compressor or booster module. Variable-area nozzle surfaces can also be deployed to regulate the bypass pressure and improve fan performance, for example during takeoff and landing. Advanced turbofan engines may also utilize a geared fan drive mechanism to provide greater speed control, reducing noise and increasing engine efficiency, or to increase or decrease specific thrust.

Low bypass turbofans produce proportionally more thrust from the exhaust flow, generating greater specific thrust for use in high-performance applications including supersonic jet aircraft. Low bypass turbofan engines may also include variable-area exhaust nozzles and afterburner or augmentor assemblies for flow regulation and short-term thrust enhancement. Specialized high-speed applications include continuously afterburning engines and hybrid turbojet/ramjet configurations.

Across these applications, combustor and turbine performance depends on the balance between higher pressure ratios and core gas path temperatures, which tend to increase efficiency, and the related effects on service life and reliability due to increased stress and wear. This balance is particularly relevant to injectors within the combustion sections, where temperature and pressure due to combustion can decrease injector service life and cause coking of fuel within injector fuel passages.

### SUMMARY

A fuel injector according to an aspect of the present invention includes a nozzle extending along an axis. The nozzle includes an annular fuel passage, a swirl chamber, a plurality of fuel ports, a discharge passage, and a spill passage. The annular passage extends through the nozzle and forms a portion of a fuel path. The swirl chamber is concentric to the axis within the nozzle. The plurality of fuel ports fluidly connects the annular fuel passage to the swirl chamber, each fuel port tangent to a peripheral wall of the swirl chamber. The discharge passage fluidly connects the swirl chamber to an outlet of the nozzle and is concentric to the axis. The spill passage fluidly connects the swirl chamber to the fuel path at a location upstream of the annual fuel passage. The spill passage and discharge passage fluidly connect to opposite ends of the swirl chamber.

A fuel system according to another aspect of the present invention includes a fuel source, a main supply line, and a fuel injector. The main supply line fluidly connects to the fuel source. The fuel injector includes a manifold fluidly connected to the main supply line and a nozzle extending along an axis. The nozzle includes an annular fuel passage, a swirl chamber, a plurality of fuel ports, a discharge passage, and a spill passage. The annular passage extends through the nozzle and forms a portion of a fuel path. The swirl chamber is concentric to the axis within the nozzle. The plurality of fuel ports fluidly connects the annular fuel passage to the swirl chamber, each fuel port tangent to a peripheral wall of the swirl chamber. The discharge passage fluidly connects the swirl chamber to an outlet of the nozzle and is concentric to the axis. The spill passage fluidly connects the swirl chamber to the fuel path at a location upstream of the annual fuel passage. The spill passage and discharge passage fluidly connect to opposite ends of the swirl chamber.

### BRIEF DESCRIPTION OF THE DRAWINGS

FIG. 1 is a schematic cross-sectional view of an injector.
FIG. 2 is an example nozzle of the injector that includes a spill passage.
FIG. 3 is a cross-sectional view along line B-B in FIG. 2 depicting a fuel passage, ports, and swirl chamber.
FIG. 4 is schematic cross-sectional view of another example nozzle with a spill passage with multiple minor segments joined to a major segment.
FIG. 5 is a schematic cross-sectional view of another example nozzle with a spill passage with a single offset minor segment joined to a major segment.

### DETAILED DESCRIPTION

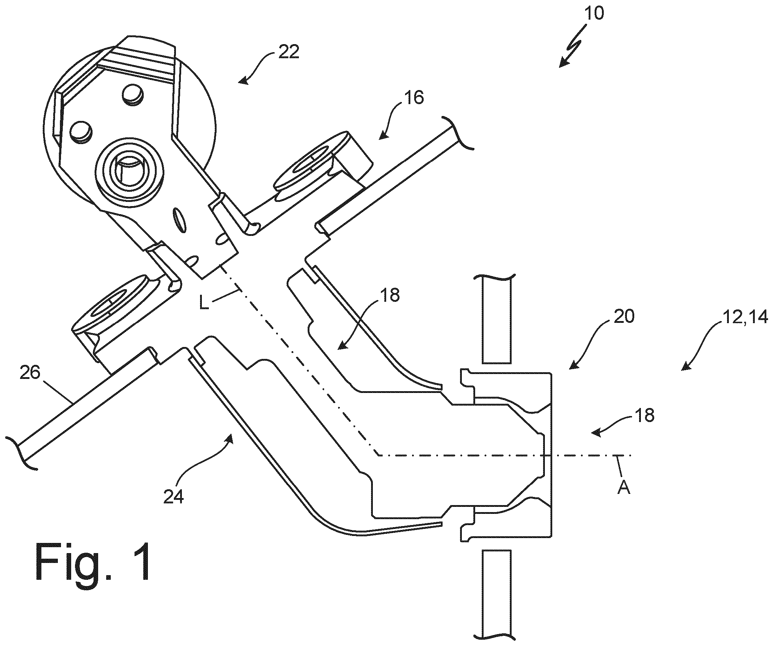

FIG. 1 is a schematic cross-sectional view of injector 10, a fuel delivery device installed within combustor 12 of gas turbine engine 14. In operation, injector 10 delivers fuel (e.g., jet A/A1) and oxidant (e.g., air) at specified mass flow rates to provide an oxidant-fuel mixture within combustor 12. Injector 10 includes mount 16, stem 18, and nozzle 20. In some examples, injector 10 can include manifold 22 and/or heat shield 24. Mount 16, stem 18, nozzle 20, and in some examples manifold 22 and/or heat shield 24 can be an assembly of components joined at respective interfaces to form injector 10. In some examples, components of injector 10 are joined using a brazing process and/or a welding process. In other examples, mount 16, stem 18, nozzle 20, and, in some examples manifold 22 and/or heat shield 24 describe portions of a monolithic body formed by, for example, an additive manufacturing process, a casting process, and/or a molding process. Further, certain features of injector 10 can be formed by a machining process or other subtractive manufacturing process.

Mount 16 supports injector 10 from stationary structure 26 of the gas turbine engine, for example, a casing surround combustor 12. One or more flanges, lips, and/or pilot diameters allow mount 16 to interface with stationary structure 26. Mount 16 further includes one or more fasteners, keys, and/or pins for affixing injector 10 relative to stationary structure 26 and the combustor of gas turbine engine. As depicted, mount 16 is a flange that abuts stationary structure 26.

Manifold 22 is outboard of mount 16 relative to an engine axis and includes supply lines fluidly communicating with a fuel source and/or one or more other adjacent injectors 10. Manifold can include one or more pipes, conduits, hoses, and/or internal passages to define supply lines, which communicate with one or more fuel passages of stem 18.

Stem 18 extends longitudinally from mount 16 through stationary structure 26 into combustion chamber of the combustor. Stem 18 includes one or more fuel passages in fluid communication with one or more supply lines of manifold 22. Stem 18 can extend linearly from mount 16 such that stem 18 is devoid of bends or elbows. In other examples, stem 18 can include one or more linear sections connected by respective bends such that a longitudinal axis of stem 18 represented by dashed line L changes at each bend relative to an adjacent linear section of stem 18. As depicted, stem 18 extends radially inward from mount 16 relative to an axis of gas turbine engine. Stem 18 includes a bend spaced apart from mount and extends at an angle relative to the radial section of stem 18 to nozzle 20.

Nozzle 20 is disposed at a distal end of stem 18 at least partially within the combustion chamber and extends along nozzle axis A parallel to a distal portion of stem 18. Nozzle 20 forms a discharge end of injector 10 and can include one or more fuel passages, fuel nozzles, air passages, air nozzles, and/or air swirlers formed by a monolithic nozzle body or formed by an assembly of subcomponents joined together to form features of nozzle 20. For example, a nozzle assembly can include a center body and one or more annular bodies concentrically disposed with respect to the center body to form one or more fuel passages configured discharge fuel along nozzle axis A. Further examples of the nozzle assembly can include an air swirler disposed about an exterior annular body of nozzle 20 to direct a circumferential flow of air to mix with discharged fuel. Each of the one or more fuel passages fluidly connects to at least one of the fuel passages of stem 18 to define respective fuel paths between manifold 22 and nozzle 20. Further, the annular bodies of nozzle 20 form at least one gaseous passage for directing oxidant through nozzle 20 to mix with fuel discharged through fuel paths of injector 10.

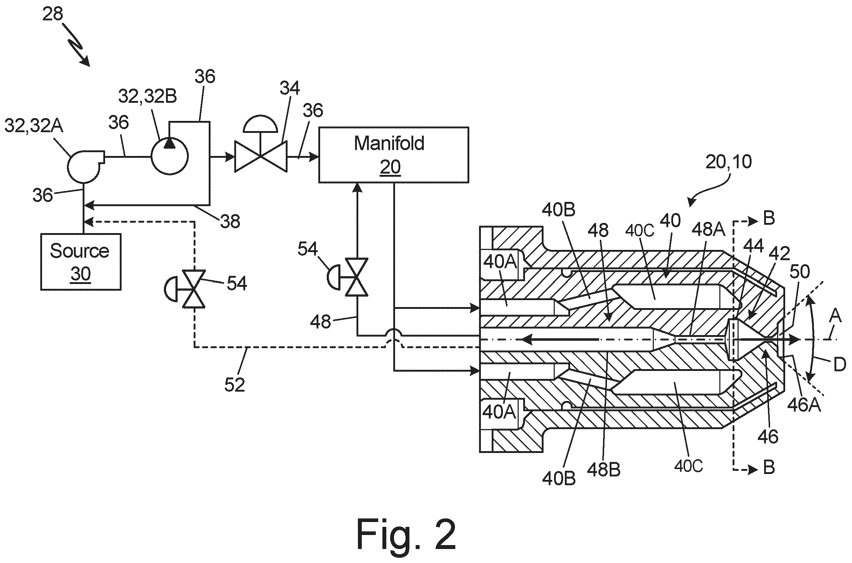

FIG. 2 is a schematic view depicting nozzle 20 along with selected components of fuel system 28 that supplies gas turbine engine 14. Fuel system 28 includes fuel source 30, one or more pumps 32, and metering valve 34 connected to manifold 22 of injector 10. Fuel source 30 is any suitable fuel storage fluidly communicating with gas turbine engine 14 and may represent a single fuel source or multiple fuel sources. One or more pumps 32 fluidly communicate with fuel source to deliver a pressurized fuel flow to metering valve 34 along supply line 36. As shown, fuel system 28 includes boost pump 32A and main pump 32B arranged in series along supply line 36. In other examples, fuel system 28 can include a single pump 32 or more than two pumps 32 to provide target fuel pressure and fuel supply ranges. Metering valve 34 has a variable position valve element that controls a fuel flow delivered to manifold 22 based on control signals received from a controller, which can be produced based on one or more feedback signals (e.g., pressure and/or fuel flow). Excess fuel discharged by one or more pumps 32 returns to fuel source 30, or an inlet on one or more pumps 32, along bypass line 38. Fuel system 28 can include additional components not shown by FIG. 2 including additional or different pumps, valves, lines, and filters, among other fuel system components.

Nozzle 20 includes at least one fuel passage 40, swirl chamber 42, at least one fuel port 44, discharge passage 46, and spill passage 48. Fuel passage 40 fluidly communicates with manifold 22 to form a fuel path along manifold 22, stem 18, and nozzle 20. Fuel passage 40 can be an annular passage formed between two concentric annular bodies of nozzle 20. In other examples, fuel passage 40 can be a symmetric or asymmetric array of fuel passages joined by an annular cavity at a downstream end of fuel passage 40 (i.e., an end adjacent to swirl chamber 42 and in a direction towards the nozzle discharge). In some examples, fuel passage 40 can be a combination of circumferentially spaced fuel passages, an annular passage, and/or annular cavity. In the example depicted by FIG. 2, the upstream end of fuel passage 40 is formed by an annular passage 40A contiguous with a plurality of connecting passages 40B equally spaced circumferentially about nozzle axis A. At the downstream end of fuel passage 40, connecting passages 40B are joined by annular cavity 40C, which terminates within nozzle 20 radially outward from swirl chamber 42. Fuel passage 40 can include a tapered and/or contoured downstream end (i.e., the end adjacent to swirl chamber 42) that defines a decreasing cross-sectional area in a direction of flow within fuel passage 40. For example, fuel passage 40, or a portion thereof (e.g., annular cavity 40C) can include a frustoconical downstream end formed by a cylindrical inner wall and a frustoconical outer wall.

One or more ports 44 fluidly connect a downstream end of fuel passage 40 to swirl chamber 42. Nozzle 20 can include a single port 44 in some examples, or multiple ports 44 in other examples. Examples of nozzle 20 with multiple ports 44 can include an array of ports 44 that are equally spaced circumferentially about nozzle axis A. Such examples of nozzle 20 include at least two ports 44 while other examples of nozzle 20 include three or more ports 44. In still other examples, nozzle 20 can include multiple ports 44 that are unequally spaced about nozzle axis A. For example, one or more ports 44 can be localized to sector of swirl chamber 42 (i.e., a region subtending less than three hundred sixty degrees of swirl chamber 42).

The centerline of each port 44 extends primarily along a circumferential direction such that fuel flow discharged from fuel passage 40 into swirl chamber 42 is imparted a circumferential velocity about nozzle axis A. In certain examples, the centerline of each port 44 is tangent to a peripheral outer wall of swirl chamber 42. Each port 44 can have any suitable cross-sectional shape normal to respective port centerlines. Example cross-sectional shapes include, but are not limited to circular, square, triangular, hexagonal, ovular, elliptical, or oblong, among other potential shapes. As depicted in FIG. 2, nozzle 20 includes at least one port 44 with a square cross-section that is oriented such that a diagonal of the cross-section coincides with a circumferential direction about nozzle axis A. Further, ports 44 coincide with a portion of fuel passage 40 with decreasing cross-sectional area, for example, the frustoconical portion of annular cavity 40C as shown in FIG. 2 and are spaced upstream relative to the downstream-most end of fuel passage 40.

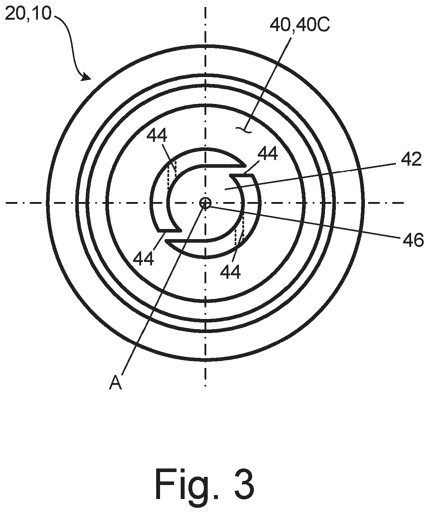

FIG. 3 is a cross-section taken along line B-B in FIG. 2 that illustrates multiple port configurations in greater detail. As shown, nozzle 20 includes at least two ports 44 spaced one hundred eight degrees apart about nozzle axis A. Additional ports 44, shown by dashed lines, can be present in further examples of nozzle 20. In still further examples, nozzle 20 can include more than four ports 44.

Referring to FIG. 2, swirl chamber 42 is radially inward from fuel passage 40 relative to nozzle axis A and has an axisymmetric cross-section about nozzle axis A. One or more ports 44 communicate with a radially outer peripheral wall between a discharge end and a spill return end of swirl chamber 42. At the discharge end, discharge passage 46 fluidly connects swirl chamber 42 with outlet 50 of nozzle 20 and an exterior region of injector 10 (e.g., combustor 12 of gas turbine engine 14). At an end opposite discharge passage 46 (i.e., the spill return end) along nozzle axis A, swirl chamber 42 fluidly connects with spill passage 48. Swirl chamber 42 includes a decreasing cross-sectional area in a direction from port 44 towards discharge passage 46, the cross-sectional normal to nozzle axis A. As shown in FIG. 2, swirl chamber 42 includes cylindrical portion that communicates with one or more ports 44 and a frustoconical portion that converges towards fuel discharge orifice. Spill passage 48 fluidly communicates with an end wall of the cylindrical portion.

Discharge passage 46 fluidly connects swirl chamber 42 to outlet 50 of injector 10, which communicates with a region exterior to injector 10, for example, to a combustion chamber of combustor 12. Fuel discharge orifice has a cross-sectional area that is a fraction of a cross-sectional area of port 44, or the net cross-sectional area of all ports 44. In some examples, net cross-sectional area of all ports 44 is two or more times the cross-sectional area of discharge passage 46. Discharge passage 46 can include divergent frustoconical portion 46A that terminates at outlet 50. Divergent frustoconical portion 46A includes nozzle angle D formed by the included angle of frustoconical portion. In some examples, nozzle angle D is greater than or equal to 60 degrees and less than or equal to 150 degrees. In another example, nozzle angle D is greater than or equal to 110 degrees and less than or equal to 150 degrees. In yet another example, nozzle angle D is greater than or equal to 60 degrees and less than or equal to 70 degrees.

Spill passage 48 fluidly connects to swirl chamber 42 opposite discharge passage 46. That is to say, discharge passage 46 and spill passage 48 connected to opposite ends of swirl chamber 42 such that fuel entering swirl chamber 42 divides between discharge passage 46 and spill passage 48. Spill passage 48 can be a passage with constant cross-section or a series of passage segments at least some segments with different cross-sectional areas. In the example depicted by FIG. 2, spill passage 48 includes minor segment 48A and major segment 48B. Minor segment 48A fluidly connects swirl chamber 42 to major segment 48B, which extends through nozzle 20 to a location upstream from fuel passage 40. In some examples, spill passage 48 fluidly connects swirl chamber 42 to manifold 22. In other examples, spill passage fluidly connects swirl chamber 42 to return line 52 of fuel system 28, which in turn fluidly connects injector 10 with fuel source 30, or a low-pressure port of a pump of fuel system 28.

In some examples, injector 10 includes spill control valve 54 disposed along return line 52. Spill control valve 54 has a variable position valve element, which modifies a flow distribution between spill passage 48 and discharge passage 46. As spill control valve 54 moves towards a closed position, flow through spill passage 48 decreases and flow through discharge passage 46 increases. Flow through spill passage 48 increases and flow through discharge passage 46 decreases as spill control valve 54 moves towards an open position. That is to say, spill control valve 54 modifies the fuel flow split between spill passage 48 and discharge passage 46.

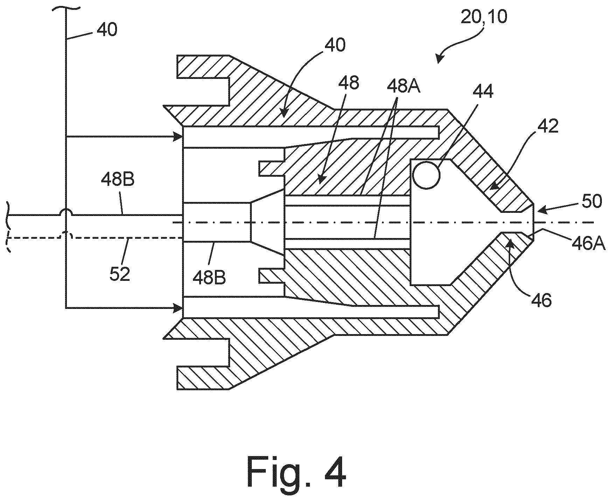

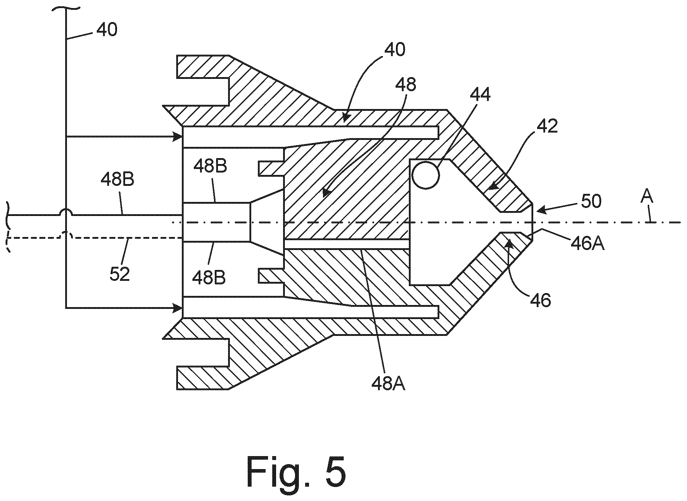

As shown, spill passage 48 (i.e., both minor segment and major segment) is concentric with nozzle axis A. In other examples, spill passage 48 can include multiple minor segments 48A circumferentially spaced about nozzle axis A, each minor segment 48A fluidly connecting swirl chamber 42 to major segment 48B of spill passage 48 as shown in FIG. 4. With multiple minor segments 48A, the flow resistance into spill passage 48 can be increased and thereby achieve a different flow split between spill passage 48 and discharge passage 46. In another example, spill passage 48 can have a single minor segment 48A that is radially offset relative to nozzle axis A as shown in FIG. 5. An offset minor segment 48A, or in another example an asymmetric distribution of minor segments 48A, produces an asymmetric flow distribution with swirl chamber 42 and hence, can bias flow within a sector of flow discharged through outlet 50.

In each of the foregoing examples, fuel passage 40 receives fuel from fuel source 30 which is directed through one or more ports 44 into swirl chamber 42. The orientation of ports 44 relative to swirl chamber 42 imparts circumferential velocity (i.e., swirl) to the fuel. Due to the net cross-sectional area of ports 44 exceeding the area of discharge passage 46, swirl chamber 42 receives excess fuel that is not required for combustion, the excess fuel exiting swirl chamber 42 via spill passage 48 while discharge passage 46 supplies fuel to the combustion chamber.

### Discussion of Possible Embodiments

The following are non-exclusive descriptions of possible embodiments of the present invention.

### A fuel injector nozzle

A fuel injector according to an example embodiment of this disclosure, among other possible things, includes a nozzle extending along an axis. The nozzle includes an annular fuel passage, a swirl chamber, a plurality of fuel ports, a discharge passage, and a spill passage. The annular passage extends through the nozzle and forms a portion of a fuel path. The swirl chamber is concentric to the axis within the nozzle. The plurality of fuel ports fluidly connects the annular fuel passage to the swirl chamber, each fuel port tangent to a peripheral wall of the swirl chamber. The discharge passage fluidly connects the swirl chamber to an outlet of the nozzle and is concentric to the axis. The spill passage fluidly connects the swirl chamber to the fuel path at a location upstream of the annual fuel passage. The spill passage is opposite the discharge passage.

The fuel injector of the preceding paragraph can optionally include, additionally and/or alternatively, any one or more of the following features, configurations and/or additional components.

A further embodiment of the foregoing fuel injector, wherein the plurality of fuel ports can be equally spaced along the peripheral wall of the swirl chamber with respect to the axis.

A further embodiment of any of the foregoing fuel injectors, wherein the plurality of fuel ports can be unequally spaced along the peripheral wall of the swirl chamber with respect to the axis.

A further embodiment of any of the foregoing fuel injectors, wherein the swirl chamber can include a cylindrical section contiguous with a frustoconical section.

A further embodiment of any of the foregoing fuel injectors, wherein the plurality of fuel ports can fluidly connect the annular fuel passage to the cylindrical section.

A further embodiment of any of the foregoing fuel injectors, wherein the discharge passage can fluidly connect a minor diameter of the frustoconical section to the outlet.

A further embodiment of any of the foregoing fuel injectors, wherein the spill passage can fluidly connect the cylindrical section to the fuel path upstream of the annular fuel passage.

A further embodiment of any of the foregoing fuel injectors, wherein the spill passage can include a minor segment forming a minimum spill passage area of the spill passage.

A further embodiment of any of the foregoing fuel injectors, wherein the minor segment can be concentric with the axis.

A further embodiment of any of the foregoing fuel injectors, wherein the minor segment can be radially offset with respect to the axis.

A further embodiment of any of the foregoing fuel injectors, wherein the discharge passage can include a minor segment contiguous with a tapered section that diverges towards the outlet.

A further embodiment of any of the foregoing fuel injectors, wherein each fuel port can include a square cross-section with a diagonal aligned with a circumferential direction about the axis.

A further embodiment of any of the foregoing fuel injectors can further include a valve disposed along the spill passage comprising a valve element variable to change a flow area through the spill passage and thereby vary a flow division between the discharge passage and the spill passage.

A further embodiment of any of the foregoing fuel injectors, wherein the swirl chamber can be radially inward from the annular fuel passage relative to the axis.

A further embodiment of any of the foregoing fuel injectors, wherein a downstream end of the annular fuel passage can include a convergent section with a minimum area at the downstream end.

A further embodiment of any of the foregoing fuel injectors, wherein the plurality of fuel ports can fluidly communicate with the convergent section at a location upstream from the downstream end.

A further embodiment of any of the foregoing fuel injectors, wherein the spill passage can be concentric with the axis.

A further embodiment of any of the foregoing fuel injectors, wherein the spill passage can include a plurality of minor segments fluidly connecting the swirl chamber to a main spill section.

A further embodiment of any of the foregoing fuel injectors, wherein the plurality of minor segments of the spill passage can be circumferentially distributed about the axis.

### A fuel system for a gas turbine engine

A fuel system according to an example embodiment of this disclosure, among other possible things, includes a fuel source, a main supply line, and a fuel injector. The main supply line fluidly connects to the fuel source. The fuel injector includes a manifold fluidly connected to the main supply line and a nozzle extending along an axis. The nozzle includes an annular fuel passage, a swirl chamber, a plurality of fuel ports, a discharge passage, and a spill passage. The annular passage extends through the nozzle and forms a portion of a fuel path. The swirl chamber is concentric to the axis within the nozzle. The plurality of fuel ports fluidly connects the annular fuel passage to the swirl chamber, each fuel port tangent to a peripheral wall of the swirl chamber. The discharge passage fluidly connects the swirl chamber to an outlet of the nozzle and is concentric to the axis. The spill passage fluidly connects the swirl chamber to the fuel path at a location upstream of the annual fuel passage. The spill passage is opposite the discharge passage.

The fuel system of the preceding paragraph can optionally include, additionally and/or alternatively, any one or more of the following features, configurations and/or additional components.

A further embodiment of the foregoing fuel system, wherein the plurality of fuel ports can be equally spaced along the peripheral wall of the swirl chamber with respect to the axis.

A further embodiment of any of the foregoing fuel systems, wherein the plurality of fuel ports can be unequally spaced along the peripheral wall of the swirl chamber with respect to the axis.

A further embodiment of any of the foregoing fuel systems, wherein the swirl chamber can include a cylindrical section contiguous with a frustoconical section.

A further embodiment of any of the foregoing fuel systems, wherein the plurality of fuel ports can fluidly connect the annular fuel passage to the cylindrical section.

A further embodiment of any of the foregoing fuel systems, wherein the discharge passage can fluidly connect a minor diameter of the frustoconical section to the outlet.

A further embodiment of any of the foregoing fuel systems, wherein the spill passage can fluidly connect the cylindrical section to the fuel path upstream of the annular fuel passage.

A further embodiment of any of the foregoing fuel systems, wherein the spill passage can include a minor segment forming a minimum spill passage area of the spill passage.

A further embodiment of any of the foregoing fuel systems, wherein the minor segment can be concentric with the axis.

A further embodiment of any of the foregoing fuel systems, wherein the minor segment can be radially offset with respect to the axis.

A further embodiment of any of the foregoing fuel systems, wherein the discharge passage can include a minor segment contiguous with a tapered section that diverges towards the outlet.

A further embodiment of any of the foregoing fuel systems, wherein each fuel port can include a square cross-section with a diagonal aligned with a circumferential direction about the axis.

A further embodiment of any of the foregoing fuel systems can further include a valve disposed along the spill passage comprising a valve element variable to change a flow area through the spill passage and thereby vary a flow division between the discharge passage and the spill passage.

A further embodiment of any of the foregoing fuel systems, wherein the swirl chamber can be radially inward from the annular fuel passage relative to the axis.

A further embodiment of any of the foregoing fuel systems, wherein a downstream end of the annular fuel passage can include a convergent section with a minimum area at the downstream end.

A further embodiment of any of the foregoing fuel systems, wherein the plurality of fuel ports can fluidly communicate with the convergent section at a location upstream from the downstream end.

A further embodiment of any of the foregoing fuel systems, wherein the spill passage can be concentric with the axis.

A further embodiment of any of the foregoing fuel systems, wherein the spill passage can include a plurality of minor segments fluidly connecting the swirl chamber to a main spill section.

A further embodiment of any of the foregoing fuel systems, wherein the plurality of minor segments of the spill passage can be circumferentially distributed about the axis.

While the invention has been described with reference to an exemplary embodiment(s), it will be understood by those skilled in the art that various changes may be made and equivalents may be substituted for elements thereof without departing from the scope of the invention. In addition, many modifications may be made to adapt a particular situation or material to the teachings of the invention without departing from the essential scope thereof. Therefore, it is intended that the invention not be limited to the particular embodiment(s) disclosed, but that the invention will include all embodiments falling within the scope of the appended claims.

## Claims

1. A fuel injector (10) comprising:
a nozzle (20) extending along an axis (A), the nozzle (20) comprising:
an annular fuel passage (40) extending through the nozzle (20) and forming a portion of a fuel path;
a swirl chamber (42) concentric to the axis (A) within the nozzle (20);
a plurality of fuel ports (44) fluidly connecting the annular fuel passage (40) to the swirl chamber (42), each fuel port (44) tangent to a peripheral wall of the swirl chamber (42);
a discharge passage (46) fluidly connecting the swirl chamber (42) to an outlet (50) of the nozzle (20), wherein the discharge passage (46) is concentric to the axis (A); and
a spill passage (48) fluidly connecting the swirl chamber (42) to the fuel path at a location upstream of the annular fuel passage (40), wherein the spill passage (48) is opposite the discharge passage (46).

2. The fuel injector (10) of claim 1, wherein the plurality of fuel ports (44) is equally spaced along the peripheral wall of the swirl chamber (42) with respect to the axis (A).

3. The fuel injector (10) of claim 1 or 2, wherein the swirl chamber (42) includes a cylindrical section contiguous with a frustoconical section, and wherein the plurality of fuel ports (44) fluidly connects the annular fuel passage (40) to the cylindrical section, and wherein the discharge passage (46) fluidly connects a minor diameter of the frustoconical section to the outlet (50), and wherein the spill passage (48) fluidly connects the cylindrical section to the fuel path upstream of the annular fuel passage (40).

4. The fuel injector (10) of claim 1, 2 or 3, wherein the spill passage (48) includes a minor segment (48A) forming a minimum spill passage area of the spill passage (48).

5. The fuel injector (10) of claim 4, wherein the minor segment (48A) is concentric with the axis (A).

6. The fuel injector (10) of claim 4, wherein the minor segment (48A) is radially offset with respect to the axis (A).

7. The fuel injector (10) of any preceding claim, wherein the discharge passage (46) includes a or the minor segment (48A) contiguous with a tapered section that diverges towards the outlet (50).

8. The fuel injector (10) of any preceding claim, wherein each fuel port (44) includes a square cross-section with a diagonal aligned with a circumferential direction about the axis (A).

9. The fuel injector (10) of any preceding claim, further comprising:
a valve (54) disposed along the spill passage (48) comprising a valve element variable to change a flow area through the spill passage (48) and thereby vary a flow division between the discharge passage (46) and the spill passage (48).

10. The fuel injector (10) of any preceding claim, wherein the swirl chamber (42) is radially inward from the annular fuel passage (40) relative to the axis (A).

11. The fuel injector (10) of any preceding claim, wherein a downstream end of the annular fuel passage (40) includes a convergent section with a minimum area at the downstream end, and wherein the plurality of fuel ports (44) fluidly communicates with the convergent section at a location upstream from the downstream end.

12. The fuel injector (10) of any preceding claim, wherein the spill passage (48) is concentric with the axis (A).

13. The fuel injector (10) of any preceding claim, wherein the spill passage (48) comprises a plurality of minor segments (48A) fluidly connecting the swirl chamber (42) to a main spill section.

14. The fuel injector (10) of claim 13, wherein the plurality of minor segments (48A) of the spill passage (48) is circumferentially distributed about the axis (A).

15. A fuel system (28) for a gas turbine engine (14), the fuel system (28) comprising:
a fuel source (30);
a main supply line (36) fluidly connected to the fuel source (30); and
the fuel injector (10) of any preceding claim, further comprising a manifold (22) fluidly connected to the main supply line (36), the annular fuel passage (40) fluidly communicating with the manifold (22), wherein the discharge passage (46) is opposite the plurality of fuel ports (44).
